# EUROPÄISCHE PATENTSCHRIFT

(11) **EP 2 536 872 B1**
(45) Veröffentlichungstag und Bekanntmachung des Hinweises auf die Patenterteilung: **02.07.2014**
(21) Anmeldenummer: 11709312.0
(22) Anmeldetag: 18.02.2011
(51) Int. Cl.: D01F 2/00, D01F 2/02, D01F 1/10

(54) **VERFAHREN ZUM HERSTELLEN EINER FASER**
METHOD FOR PRODUCING A FIBER
PROCÉDÉ DE FABRICATION D'UNE FIBRE

(30) Priorität: 18.02.2010 AT 2512010
(43) Veröffentlichungstag der Anmeldung: 26.12.2012
(73) Patentinhaber: Helfenberger Immobilien LLC & Co Textilforschungs- Und Entwicklungs KG, 4184 Helfenberg (AT)
(72) Erfinder: GLASER, Josef, A-4184 Helfenberg (AT)
(74) Vertreter: Beer & Partner Patentanwälte KG
(86) Internationale Anmeldenummer: PCT/AT2011/000085
(87) Internationale Veröffentlichungsnummer: WO 2011/100777

(56) Entgegenhaltungen:
- WO-A1-2005/007946
- WO-A1-2009/036480
- WO-A2-2009/021259
- DE-A1- 10 053 359

## Beschreibung

Die Erfindung betrifft ein Verfahren zum Herstellen einer Faser oder eines Formteils, bei dem ein Adsorptionsmittel, insbesondere'Aktivkohle, mit einer Celluloselösung vermischt wird.

Adsorptionsmittel sind in der Regel poröse Materialien, die auf Grund ihrer großen Oberfläche Moleküle durch physikalische Kräfte an sich binden. Ein bekanntes Adsorptionsmittel ist beispielsweise Aktivkohle, welches eine hochporöse Struktur aufweist.

Es ist bekannt, textile Flächengebilde aus Fasern, bei denen zumindest die Oberflächenschicht Aktivkohle aufweist, auf Grund der Adsorptionseigenschaft der Aktivkohle als Schutztextilien zu verwenden (vgl. etwa WO 2009/021259). Die Qualität der Faser hängt dabei maßgeblich davon ab, wie viel der porösen Struktur der Aktivkohle genutzt werden kann. Je höher die freie Oberfläche der Aktivkohle an der Faseroberfläche ist, desto besser sind die Adsorptionseigenschaften der Faser insgesamt. Nachteilig bei der Herstellung solcher Fasern aus einer Spinnlösung ist jedoch, dass ein wesentlicher Teil der Oberfläche der Aktivkohle beim Spinnen der Faser "verstopft" wird, so dass nur ein relativ geringer Teil der porösen Struktur der Aktivkohle in der fertigen Faser genutzt werden kann.

Der Erfindung liegt die Aufgabe zu Grunde, ein Verfahren der eingangs genannten Gattung zur Verfügung zu stellen, mit welchem die Adsorptionseigenschaften von Fasern oder Formteilen verbessert werden.

Gelöst wird diese Aufgabe erfindungsgemäß mit einem Verfahren, welches die Merkmale des Anspruches 1 aufweist.

Bevorzugte und vorteilhafte Ausführungsformen der Erfindung sind Gegenstand der Unteransprüche.

Erfindungsgemäß ist vorgesehen, dass die Cellulose nach dem Spinnen der Faser bzw. dem Formen des Formteils acetyliert wird. Durch die Acetylierung der Oberfläche der Cellulosefaser, die vorzugsweise Aktivkohle und gegebenenfalls Graphit aufweist, und anschließendem Lösen des entstandenen Cellulose-Acetats wird die nutzbare Oberfläche der Aktivkohle wesentlich erhöht. Unter Oberfläche der Cellulosefaser wird ebenfalls die innerhalb von eventuell hervorgerufenen Rissen vorliegende Oberfläche verstanden.

Die acetylierte Cellulose kann aus der Faser/dem Formteil gelöst, insbesondere durch ein Lösungsmittel gelöst, werden, Die Faser/das Formteil kann in einem weiteren Schritt gewaschen und getrocknet werden.

Die Acetylierung der Cellulose in einer fertigen Faser oder einem fertigen Formteil ist beispielhaft in der Fig. dargestellt, wobei die Faser oder das Formteil entweder mit einem bekannten Verfahren hergestellt sein kann oder, sofern ein Reservierungsmittel verwendet wird, bis auf die Reservierung des Adsorptionsmittels mit einem sonst bekannten Verfahren hergestellt sein kann.

Die Oberfläche von Adsorptionsmittel an der Oberfläche der fertigen Faser sowie gegebenenfalls zumindest teilweise über den Querschnitt der Faser wird somit wieder freigegeben, womit die poröse Struktur des Adsorptionsmittels in der Faser fast vollständig genutzt werden kann. Laborversuche haben ergeben, dass die nutzbare Oberfläche der Aktivkohle bei einer herkömmlichen Faser bei 15,17 m²/g liegt, wogegen erfindungsgemäß die nutzbare Oberfläche der Aktivkohle bei 339,85 m²/g, d.h. bei mehr als dem 22-fachen, liegt.

Unter Oberfläche des Adsorptionsmittels, insbesondere der Aktivkohle kann im Rahmen der Erfindung nicht nur die nach außen weisende Fläche des Adsorptionsmittels verstanden werden sondern ebenfalls die innere Oberfläche der porösen Struktur.

Die Acetylierung der Cellulose kann beispielsweise wie folgt erzielt werden:

Die Oberfläche der Faser oder eines Formteils, welche beispielsweise einen Aktivkohleanteil von 30 bis 50 % bezogen auf die Cellulosemasse aufweist, welche(s) mit einem bekannten Verfahren oder bis auf die Reservierung des Adsorptionsmittels mit einem sonst bekannten Verfahren hergestellt sein kann, wird einer Reaktionslösung beinhaltend mit 100 ml Toluol absolut, 50 ml Essigsäureanhydrid und 0,1 ml Schwefelsäure (H₂SO₄) als Katalysator und Rissbildner behandelt; d.h. in Kontakt gebracht. Das Verhältnis von Faser oder Formteil zur Reaktionslösung kann dadurch bestimmt sein, dass die Faser oder das Formteil vollständig mit der Reaktionslösung bedeckt ist. Alternativ oder zusätzlich zu Essigsäureanhydrid kann beispielsweise Isopropenyl-Acetat verwendet werden. Durch die Acetylierung wird der in der porösen Struktur des Adsorptionsmittels befindliche Teil der Cellulose in eine lösliche Form (Cellulose-Acetat) gebracht.

Im Rahmen der Erfindung kann der Faser oder dem Formteil zum Acetylieren entweder eine Reaktionsmischung im stöchiometrischen Überschuss zugegeben werden, d.h. es wird mehr Reaktionslösung verwendet, als zum Aceytlieren eines gewünschten Anteils an Cellulose notwendig wäre. In diesem Fall kann die Reaktion dann durch Lösen des Cellulose-Actetas und Waschen der Faser oder des Formteils gestoppt werden. Im Rahmen der Erfindung kann alternativ dazu auch nur genau die Menge an Reaktionslösung eingesetzt werden, welche zum Acetylieren einer vorbestimmten Menge an Cellulose notwendig ist, wobei die Acetylierung dann automatisch stoppt.

Durch die Schwefelsäure entstehen feine Risse in der Faser, ohne dass diese nachteilig beeinflusst wird. Somit kann Cellulose nicht nur am Umfang der Faser acetyliert werden, sondern es ist auch eine Acetylierung der Cellulose über einen Großteil des Querschnitts der Faser möglich.

Die acetylierte, lösliche Cellulose wird anschließend nach folgendem Verfahren gelöst und ausgewaschen:
- Zugabe von 150 ml Dichlormethan + 15 ml Methanol
- 4 Stunden Rühren (kalt)
- Zugabe von 150 ml Dichlormethan + 15 ml Methanol
- 24 Stunden Rühren (kalt)
- Zugabe von 150 ml Dichlormethan + 15 ml Methanol
- 24 Stunden Rühren (kalt)

Alternativ oder zusätzlich zum Dichlormethan-Methanol-Gemisch kann als Lösungsmittel für die acetylierte Cellulose auch Aceton verwendet werden. Die zum Acetylieren der Cellulose und/oder zum Lösen des Cellulose-Acetats verwendeten Mittel können nach deren Einsatz wiedergewonnen, beispielsweise durch ein Trennverfahren wiedergewonnen, werden. Allfällige Abfälle an Cellulose-Acetat und Aktivkohle können verworfen werden.

Die so entstandene Faser wird in einem weiteren Schritt beispielsweise mit Wasser gewaschen, d.h. das Lösungsmittel sowie das gelöste oder noch nicht gelöste Cellulose-Acetat werden von der Faser abgewaschen, und in einem weiteren Schritt getrocknet.

Die nutzbare Oberfläche der in diesen Laborversuchen verwendeten Aktivkohle als Adsorptionsmittel ist gegenüber einem Adsorptionsmittel ohne Reservierung bzw. gegenüber einer Faser/einem Formteil, bei welchem die Cellulose nicht acetyliert wurde, um mehr als das 22-fache angestiegen.

Im Rahmen der Erfindung können bekannte Verfahren zum Herstellen von Fasern angewandt werden, indem die Mischung wie oben beschrieben hergestellt und diese Mischung dann versponnen wird oder ein Hauptstrom aus im Wesentlichen reiner Polymerlösung und ein getrennter Teilstrom aus Polymerlösung und Mischung hergestellt wird und diese beiden vorerst getrennten Ströme dann gemeinsam versponnen werden.

Weiters kann die erfindungsgemäße Mischung bei an sich bekannten Spinnverfahren und Verfahren zur Garnherstellung und Umspinnungsverfahren verwendet werden, wie z.B. bei DREF-Vertahren oder CORE-Verfahren. Mit der verwendeten Mischung bzw. deren Verwendung ist es möglich, Garne mit gezielten Kern(Seele)/Mantelstrukturen zu erstellen. Hierbei wird der Kern/die Seele (z.B. Aramide oder aromatische Polyamide), der/die je nach gewünschter Eigenschaft gewählt werden kann, mit der erfindungsgemäßen Faser umsponnen. Somit können vorteilhafterweise die Eigenschaften von Kern/Seele und Faser, wie z.B. Adsorptionsfähigkeit, Zugfestigkeit und Hitzebeständigkeit, miteinander kombiniert werden. Auch kann die erfindungsgemäße Mischung im Meltblow-Verfahren, beispielsweise zum Herstellen von Faservliesen, und/oder Elektro-Spinning-Verfahren verwendet werden.

Die Erfindung ist bei an sich bekannten Lyocellverfahren (N-Methylmorpholine, N-oxide, NMMNO) zur Herstellung einer Faser sowie bei Nassspinnverfahren anwendbar.

Durch das Lyocell-Verfahren kann die Faser eine Kern-Hülle-Struktur erhalten. Bei dieser Kern-Hülle-Struktur kann es vorkommen, dass die dünne Hülle einen geringeren Anteil an Aktivkohle aufweist als der Kern. Durch die erfindungsgemäße Acetylierung der Cellulose nach dem Spinnen der Faser kann die Hülle zumindest teilweise durch Acetylieren gelöst werden, wodurch man eine wesentlich stärker adsorbierende Faser enthält

Die erfindungsgemäß erhaltenen Fasern bzw. Formteile können unter anderem in Form von textilen Flächengebilden, wie z.B. Gestricke, Vliese, Faservliese oder dergleichen, für deren beispielsweise Verwendung als Schutzbekleidung oder Sportbekleidung bzw. in Form von Folien weiterverarbeitet werden.

Zusammenfassend kann ein Ausführungsbeispiel der Erfindung wie folgt dargestellt werden:

Verfahren zum Herstellen einer Faser oder eines Formteils, bei dem ein Adsorptionsmittel, insbesondere Aktivkohle, mit einer Celluloselösung vermischt wird, dadurch gekennzeichnet, dass Polymer nach dem Spinnen der Faser bzw. dem Formen des Formteils acetyliert wird und dass acetylierte Cellulose aus der Faser bzw. dem Formteil gelöst wird.

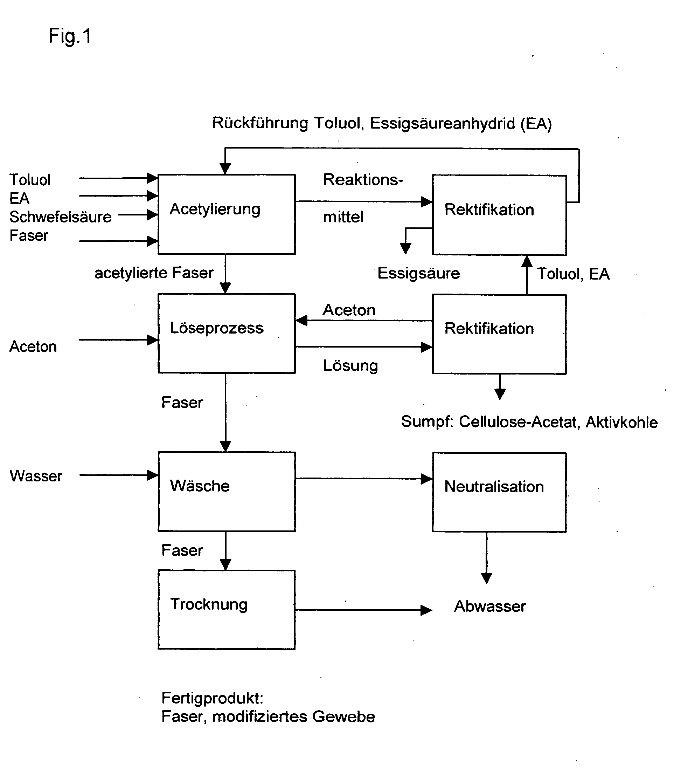

## Patentansprüche

1. Verfahren zum Herstellen einer Faser oder eines Formteils, bei dem ein Adsorptionsmittel, insbesondere Aktivkohle, mit einer Celluloselösung vermischt wird, **dadurch gekennzeichnet, dass** die Cellulose nach dem Spinnen der Faser bzw. dem Formen des Formteils acetyliert wird und die acetylierte Cellulose aus der Faser bzw. dem Formteil gelöst wird.

2. Verfahren nach Anspruch 1, **dadurch gekennzeichnet, dass** die Cellulose zum Acetylieren mit Toluol und Essigsäureanhydrid und/oder Isopropenyl-Acetat in Kontakt gebracht wird.

3. Verfahren nach Anspruch 1 oder 2, **dadurch gekennzeichnet, dass** Cellulose mit einem Rissbildner, vorzugsweise Schwefelsäure, in Kontakt gebracht wird.

4. Verfahren nach einem der Ansprüche 1 bis 3, **dadurch gekennzeichnet, dass** die acetylierte Cellulose durch ein Lösungsmittel, vorzugsweise, Aceton und/oder ein Gemisch aus Dichlormethan und Methanol, gelöst wird.

5. Verfahren nach einem der Ansprüche 1 bis 4, **dadurch gekennzeichnet, dass** die Faser bzw. das Formteil gewaschen und gegebenenfalls getrocknet wird.

## Claims

1. A method for the manufacture of a fibre or a moulded part, in which a means of adsorption, in particular active carbon, is mixed with a cellulose solution, **characterised in that** after the spinning of the fibre or the moulding of the moulded part, the cellulose is acetylated, and the acetylated cellulose is dissolved out of the fibre or the moulded part.

2. The method according to claim 1, **characterised in that** for purposes of acetylation the cellulose is brought into contact with toluene and acetic anhydride and/or isopropenyl acetate.

3. The method according to claim 1 or 2, **characterised in that** cellulose is brought into contact with a crack instigator, preferably sulphuric acid.

4. The method according to any one of the claims 1 to 3, **characterised in that** the acetylated cellulose is dissolved by means of a solvent, preferably acetone and/or a mixture of dichloromethane and methanol.

5. The method according to any one of the claims 1 to 4, **characterised in that** the fibre or the moulded part is washed and dried as necessary.

## Revendications

1. Procédé de fabrication d'une fibre ou d'une pièce moulée, dans lequel un moyen d'adsorption, en particulier du charbon actif, est mélangé à une solution cellulosique, **caractérisé en ce que** la cellulose est acétylée après le filage de la fibre ou le moulage de la pièce moulée et que la cellulose acétylée est dissoute dans la fibre ou la pièce moulée.

2. Procédé selon la revendication 1, **caractérisé en ce que** la cellulose à acétyler est mise en contact avec de toluène et de l'anhydride d'acide acétique et/ou de l'isopropényl acétate.

3. Procédé selon la revendication 1 ou 2, **caractérisé en ce que** la cellulose est mise en contact avec un agent de craquage de préférence de l'acide sulfurique.

4. Procédé selon une des revendications 1 à 3, **caractérisé en ce que** la cellulose acétylée est dissoute par un solvant, de préférence de l'acétone et/ou un mélange de dichlorométhane et de méthanol.

5. Procédé selon une des revendications 1 à 4, **caractérisé en ce que** la fibre ou la pièce moulée est lavée et éventuellement séchée.
